# EUROPEAN PATENT APPLICATION

(11) **EP 2 247 095 A2**
(43) Date of publication of application: **03.11.2010**
(21) Application number: 09013138.4
(22) Date of filing: 17.10.2009
(51) Int. Cl.: H04N 5/232, G02B 7/28

(54) **Blended autofocus using mechanical and "softlens" software based technologies**

(30) Priority: 27.04.2009 US 387048
(71) Applicant: Dialog Imaging Systems GmbH, 73230 Kirchheim/Teck-Nabern (DE)
(72) Inventor: Campbell, Scott, P., Thousand Oaks CA 91362 (US)
(74) Representative: Schuffenecker, Thierry

(57) **Abstract**

A blended approach to achieving best system-level autofocus in a camera module where conventional mechanical autofocus techniques (and their associated filter algorithms) are used in conjunction with softlens software based autofocus techniques. In this manner, the mechanical autofocus approach needs only get close to the best focus position (thereby relaxing its tolerances) and then the softlens autofocus approach takes over and completes the fine tuning of the best focus (thereby relaxing its capabilities requirements).

## Description

### Technical field

The invention relates to autofocusing methods for camera systems, and more particularly to a blended approach of using conventional mechanical autofocus with softlens autofocus techniques to achieve best system-level autofocus in a camera module.

### Background art

As camera sensor pixels get smaller and smaller, the need to accurately resolve them requires more and more of the autofocus (AF) system. Efforts have been underway to improve on mechanical and softlens autofocus (AF) algorithms and methods. Softlens is a software-based auto focus approach for camera systems, popularized originally in telescopic systems and attempted more recently in cell phone camera systems. It combines the use of a (blurring) phase function that is added to the normal lens prescription and subsequent deconvolution processing via software of the captured image to achieve camera system focus with no moving (mechanical) parts. The focus point and depth of field are also variable in the deconvolution software and therefore tunable. Some of the latest efforts in this respect are listed below.

### Patents and papers which relate to the present invention are:

U.S. Patent 6,970,789 (Ippolito et al.) describes a method for determining a best initial focal positioning using linear and quadratic regression using a smart-focusing and double loop software autofocus. Also used are a coarse loop, fine loop and parabolic interpolation procedure. The method however relates to samples on slides under a microscope.

"Modified fast climbing search auto-focus algorithm with adaptive step size searching technique for digital camera", Consumer Electronics, IEEE Transactions, May 2003, Volume: 49, Issue: 2, discusses an algorithm which adopts threshold gradient and edge point count techniques and a focus value function, additionally, a relative difference ratio circuit is also proposed.

"Efficient Auto-Focus Algorithm Utilizing Discrete Difference Equation Prediction Model for Digital Still Cameras", Chih-Ming Chen^{a}, Chin-Ming Hong^{b}, Han-Chun Chuang^{c}, Institute of Learning Technology National Hualien University of Education^{a}, Institute of Applied Electronic Technology National Taiwan Normal University^{b}, Institute of Mechatronic Technology National Taiwan Normal University^{c}, presents an auto-focus algorithm combining the discrete difference equation prediction model (DDEPM) and bisection search method. The algorithm uses coarse search with DDEPM and fine search with the bisection search method.

It should be noted that none of the above-cited examples of the related art provide the advantages of the below described invention.

### Summary of the invention

It is an object of at least one embodiment of the present invention to provide a method for achieving best system-level autofocus in a camera module.

It is another object of the present invention to use conventional mechanical autofocus techniques (and their associated filter algorithms) in conjunction with softlens AF techniques.

It is yet another object of the present invention to have the mechanical autofocus approach get close to the best focus position (thereby relaxing its tolerances) and to then have the softlens autofocus approach take over and complete the fine tuning of the best focus.

It is still another object of the present invention to use the softlens AF approach to buy back some depth of field performance in low f-number optical systems.

It is a further object of the present invention is to thereby allow for simpler low-f-number lenses, and a higher system Signal-to-Noise Ratio (SNR) and system Modulation Transfer Function (MTF).

These and many other objects which have been achieved by a blended approach to achieving best system-level autofocus in a camera module. In this blended approach, conventional mechanical autofocus techniques (and their associated filter algorithms) are used in conjunction with softlens AF techniques. In this manner, the mechanical autofocus approach needs only get close to the best focus position (thereby relaxing its tolerances) and then the softlens autofocus approach takes over and completes the fine tuning of the best focus (thereby relaxing its capabilities requirements). Additionally, the softlens AF approach may be used to buy back some depth of field performance in low f-number optical systems (thereby allowing for simpler low-f-number lenses, higher system SNR and higher system MTF).

These and many other objects and advantages of the present invention will be readily apparent to one skilled in the art to which the invention pertains from a perusal of the claims, the appended drawing, and the following detailed description of the preferred embodiments.

### Description of the drawings

- FIG. 1: is a block diagram of the first preferred embodiment of the present invention.
- FIG. 2: is a block diagram of the second preferred embodiment of the present invention based on FIG. 1.
- FIG. 3: is a block diagram of the third preferred embodiment of the present invention based on FIG. 2.

### Description of the preferred embodiment

As camera sensor pixels get smaller and smaller, the need to accurately resolve them requires more and more of the autofocus (AF) system. However, in modern camera systems, accurate focus may be beyond the capabilities of the AF mechanics and/or the AF filter algorithm that must decide when best focus is achieved. Furthermore, tip and tilt requirements between the lens and the sensor during camera module assembly become tighter and tighter as pixels get smaller and lens f-numbers get lower to compensate for smaller pixels.

A solution to this increasing problem is to use blended autofocusing by pairing up mechanical AF with software AF (such as the Extended Depth Of Field (EDOF) softlens AF technologies popular today). In this manner, the mechanical AF first goes as far as it can in achieving best focus and then the image is captured. Second, the softlens AF takes over during image processing and completes the focus action.

The advantages of this tandem approach are many:
1. The resolution requirements on the mechanical AF are relaxed,
2. The time to achieve sufficiently good mechanical AF is shortened,
3. The range over which the softlens AF must function is vastly reduced,
4. The processing required for the softlens AF processing is reduced,
5. The softlens AF processing can also be used to adjust the perceived depth of field, thereby allowing for the use of lower f-number optics for higher SNR without focus penalties,
6. The mechanical alignment tolerances between the lens and the sensor are relaxed as softlens AF can then compensate for tip / tilt problems in the camera module.

With these system-level requirements relaxations, it is possible to design rational camera systems with pixels at or below 1.75 um (micron) or when resolutions are above 5 Megapixels (MP) or so. Furthermore, these camera systems can have added functionalities not available in conventional single-approach systems, such as small softlens AF processing code blocks (with attending considerable gate count reduction), compensation for assembly tip / tilt misalignment, faster (perhaps twice or more as fast) mechanical AF algorithms and depth of field tuning of low-artifact images. Tuning is possible here because the strength of the softlens AF algorithm can be varied in software after image capture. Depth of field tuning means the user gets to tweak the parameters of the softlens AF algorithm to achieve a desired look in the image. For example, this is done commonly in mechanical systems by adjusting the lens' f-number to vary the captured depth of field, or by adjusting the lens' focus position to select what part of the image is to be in focus and what part is to be out of focus. Tuning in softlens AF does this during image processing after the picture is taken instead of adjusting the lens before taking the picture.

In a first preferred embodiment of the present invention the sequence to achieve this tandem AF technique is as follows:
1. Perform mechanical AF to within an acceptable AF step size tolerance,
2. Capture the image,
3. Pre-process the image using a constrained softlens AF processing algorithm that has a simplified version of a softlens AF processing algorithm,
   a. Perform refocus-range-limited softlens AF processing,
   b. Perform any additional softlens AF processing in image regions that may be affected by tip / tilt misalignment and/or Petzval curvature,
   c. Constrain the softlens AF processing to achieve a preferred depth of field look in the output image,
4. Hand off the pre-processed image to the rest of the image processing pipeline.

Where:
- acceptable in Step #1 above is defined as "close enough to the correct focus such that the concurrent softlens AF processing can properly complete the net focus action",
- constrained in Step #3 above is defined as "the algorithm is constrained because it only has to deconvolve blur from a little bit of defocus instead of deconvolving blur from the entire object distance defocus range, i.e. the range of the softlens autofocus does not include the entire object distance range, but rather a focus range that is within the bounds of the mechanical AF steps",
- simplified in Step #3 above is defined as "the algorithm does not have to work as hard to succeed because the degree of defocus is not as bad as it would be in a softlens-only focus system (due to the approximately-good focus achieved by the mechanical focus system), i.e. the softlens AF does not have to perform over the entire object distance defocus range, but only needs to perform over the bounds between two mechanical AF steps",
- refocus-range-limited in Step #3.a. above is defined as "the softlens AF processing need only refocus the camera system within a limited range of two neighboring mechanical AF steps rather than across the whole range of object defocus",
- preferred in step #3.c. above is defined as "whatever is preferred or can be selected by the user or that which is most common for the type of camera system it is in use in".
Exact specifications for the terms "acceptable", "constrained", "simplified and refocus-range-limited" can only be defined when a specific design is implemented. "Hand off" in step 4. above means to transmit the image data from the softlens AF processor to the associated image signal processing pipeline. This is done in the same manner that image data is usually transmitted from the image sensor to the image processing pipeline.

As an example of methodology, consider the case of a 1.4 um pixel used in conjunction with an f/2.0 imaging lens. Ideally, an f/2.0 imaging lens should provide a Full Width Half Maximum (FWHM) optical spot size in the image plane of approximately 1.5 um. However, due to aberrations, the optical spot sizes may range from FWHM of near 1.5 um in the center of the image to several microns in the image perimeter regions. As well, due to mechanical AF actuation and filter discrimination capabilities limitations, the practical resolved spot sizes may be larger than these values. If, for example, the mechanical AF has the capability to resolve the focus down to half of the imaging lens' depth of field (approximately 3 um, this refers to Step #1 above "perform best or acceptable mechanical AF") then the focused spot sizes may also increase by another factor of 1.5 to 2 times. Overall, this results in a practical mechanical AF capability that provides best-focused spot sizes 2 to 5 times larger than ideal.

Furthermore, a typical hill climbing algorithm used with a Sobel filter may result in moderately rapid and accurate mechanical AF point selection, as in the above discussion. However, depending on how critical the mechanical AF needs to be, even these algorithms could require up to half a second or more to settle. This refers to the time-limiting factor during Step #1, that creates lag between request and capture, that the first preferred embodiment of the present invention is seeking to minimize by relaxing the mechanical AF accuracy requirements. This adds to the overall lag in the time between a capture is requested by the user and the actual capture takes place. This is undesirable.

Alternatively, if a softlens AF approach is relied upon solely, then this approach must correct for spot sizes that may range over 10 to 20 times larger than those ultimately desired to resolve to sensor's pixels. This refers to "constrained" or "simplified" in Step #3 above. A system that only has softlens AF for focus has to work very hard to succeed, and often does not. That requires a lot of processing power and time. The approach of the first preferred embodiment of the present invention relaxes this requirement on the softlens AF processing by making focus an easier problem to solve - by performing mechanical AF first, thereby range-limiting the softlens AF processing and thus requiring less of the softlens AF than would be required in a softlens-only system. This requires significant care in the application of the phase function imposed onto the lens and significant gate counts and times (seconds) for the post-capture processing. It also results in noticeable artifacts (such as color haloing and edge ringing).

However, if the softlens AF is only required to correct for spot sizes that are 2 to 5 times larger than optimal (because the mechanical AF has done most of the heavy AF lifting first), then the softlens AF process can be more successful with fewer gate counts, shorter processing times and much less noticeable artifacts. As well, because the mechanical AF does not need to achieve its highest capability in any given focus request (because the softlens AF will compensate for the mechanical AF shortcomings), the mechanical AF algorithm can proceed with greater expedience, thereby shortening the lag time during capture. Refer to Steps #1, 3 and 4.

Furthermore, because Petzval curvature exists in all lens designs (wherein the blur function is radially dependent) and because mechanical tip / tilt misalignment generally exists in camera modules, even an ideal mechanical AF process will not provide an ideal image under realistic conditions. Petzval curvature and lens-sensor tip / tilt misalignment will create blur that worsens toward the image corners.

Fortunately, with a softlens AF booster to the mechanical AF, practical artifacts such as Petzval curvature and tip / tilt blur can be corrected for. After mechanically-focused capture, the softlens AF varies its strength depending on known mechanical AF limitations across the image plane. Then, the softlens AF compensates for and levels out all net focus limitations to produce idealized images.

In a second preferred embodiment of the present invention, after a first-pass uniform depth of field softlens the autofocusing action is taken (refer to Step #3.a. below), additional location-specific processing may be required to refine the focus where tip / tilt misalignment or curvature make blur in those regions worse than in regions that do not suffer from defocus due to these effects. This results in Step #5. The sequence to achieve this is as follows:
1. Perform mechanical AF to within an acceptable AF step size tolerance,
2. Capture the image,
3. Pre-process the image using a constrained softlens AF processing algorithm that has a simplified version of a softlens AF processing algorithm,
   a. Perform refocus-range-limited softlens AF processing,
   b. Perform any additional softlens AF processing in image regions that may be affected by tip / tilt misalignment and/or Petzval curvature,
   c. Constrain the softlens AF processing to achieve a preferred depth of field look in the output image,
4. Hand off the pre-processed image to the rest of the image processing pipeline,
5. Add additional location-specific processing to
   a. refine the focus where tip / tilt misalignment or curvature make blur in those regions worse than in regions that do not suffer from defocus due to the Petzval curvature,
   b. vary the softlens AF strength depending on known mechanical AF limitations across the image plane.

In a third preferred embodiment of the present invention, a further sixth step is advantageous where the user can select the depth at which he wishes his image to be at best focus, as well as the overall depth of focus in his image. The sequence to achieve this is as follows:
1. Perform mechanical AF to within an acceptable AF step size tolerance,
2. Capture the image,
3. Pre-process the image using a constrained softlens AF processing algorithm that has a simplified version of a softlens AF processing algorithm,
   a. Perform refocus-range-limited softlens AF processing,
   b. Perform any additional softlens AF processing in image regions that may be affected by tip / tilt misalignment and/or Petzval curvature,
   c. Constrain the softlens AF processing to achieve a preferred depth of field look in the output image,
4. Hand off the pre-processed image to the rest of the image processing pipeline,
5. Add additional location-specific processing to
   a. refine the focus where tip / tilt misalignment or curvature make blur in those regions worse than in regions that do not suffer from defocus due to the Petzval curvature,
   b. vary the softlens AF strength depending on known mechanical AF limitations across the image plane,
6. Selection of depth at which a user wishes the image to be at best focus, as well as the overall depth of focus in the image.
In a variation of the third preferred embodiment of the present invention, Step #6 may use a camera preset or presets rather than allowing for selection by the user. These preferences, provided by the user, may either be performed in Step #6 or be applied between Steps #3 and 4..

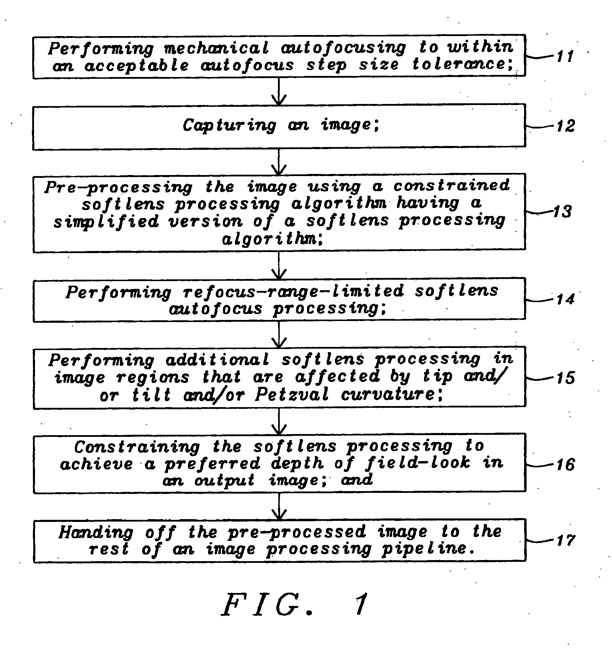

We now describe the method of the first preferred embodiment of the present invention with reference to the block diagram of Fig. 1:
Block 11 performs mechanical autofocusing to within an acceptable autofocus step size tolerance;
Block 12 captures an image;
Block 13 pre-processes the image using a constrained softlens AF processing algorithm having a simplified version of a softlens AF processing algorithm;
Block 14 performs refocus-range-limited softlens AF processing;
Block 15 performs additional softlens AF processing in image regions that are affected by tip and/or tilt and/or Petzval curvature;
Block 16 constrains the softlens AF processing to achieve a preferred depth of field-look in an output image; and
Block 17 hands off the pre-processed image to the rest of an image processing pipeline.

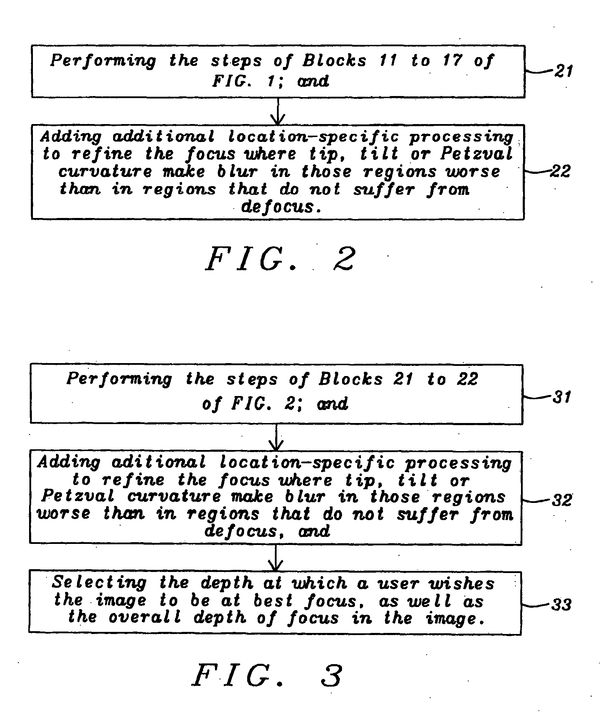

We now describe the method of the second preferred embodiment of the present invention with reference to the block diagram of Fig. 2:
Block 21 repeats the steps of Blocks 11 to 17 of Fig. 1; and
Block 22 adds additional location-specific processing to refine the focus where tip, tilt or Petzval curvature make blur in those regions worse than in regions that do not suffer from defocus.

We next describe the method of the third preferred embodiment of the present invention with reference to the block diagram of Fig. 3:
Block 31 repeats the steps of Blocks 21 to 22 of Fig. 2; and;
Block 32 adds additional location-specific processing to refine the focus where tip, tilt or Petzval curvature make blur in those regions worse than in regions that do not suffer from defocus; and
Block 33 selects the depth at which a user wishes the image to be at best focus, as well as the overall depth of focus in the image.

While the invention has been particularly shown and described with reference to the preferred embodiments thereof, it will be understood by those skilled in the art that various changes in form and details may be made without departing from the spirit and scope of the invention.

## Claims

1. A method of using blended autofocusing using mechanical and softlens autofocusing, comprising the steps of:
a) performing mechanical autofocusing to within an acceptable autofocus step size tolerance;
b) capturing an image;
c) pre-processing said image using a constrained softlens autofocus processing algorithm having a simplified version of a softlens autofocus processing algorithm by:
I. performing refocus-range-limited softlens autofocus processing; and
d) handing off said pre-processed output image to the rest of an image processing pipeline.

2. A method of using blended autofocusing using mechanical and softlens autofocusing , comprising the steps of:
a) performing mechanical autofocusing to within an acceptable autofocus step size tolerance;
b) capturing an image;
c) pre-processing said image using a constrained softlens autofocus processing algorithm having a simplified version of a softlens autofocus processing algorithm by:
I. performing refocus-range-limited softlens autofocus processing;
d) handing off said pre-processed output image to the rest of an image processing pipeline;
e) performing additional location-specific processing by:
I. refining the focus where tip makes blur worse in those regions that do not suffer from defocus;
II. refining the focus where tilt makes blur worse in those regions that do not suffer from defocus;
III. performing additional location-specific processing to refine the focus where Petzval curvature make blur worse in those regions that do not suffer from defocus;
IV. deconvolving blur from a section of defocused area of said image; and
V. varying the softlens autofocus strength depending on known mechanical autofocus limitations across the image plane.

3. A method of using blended autofocusing using mechanical and softlens autofocusing, comprising the steps of:
a) performing mechanical autofocusing to within an acceptable autofocus step size tolerance;
b) capturing an image;
c) pre-processing said image using a constrained softlens autofocus processing algorithm having a simplified version of a softlens autofocus processing algorithm by:
I. performing refocus-range-limited softlens autofocus processing;
d) handing off said pre-processed output image to the rest of an image processing pipeline;
e) performing additional location-specific processing by:
I. refining the focus where tip makes blur worse in those regions that do not suffer from defocus;
II. performing additional location-specific processing to refine the focus where tilt makes blur worse in those regions that do not suffer from defocus;
III. performing additional location-specific processing to refine the focus where Petzval curvature make blur worse in those regions that do not suffer from defocus;
IV. deconvolving blur from a section of defocused area of said image;
f) Selection of depth at which a user wishes said image to be at best focus; and
g) Selection by the user of the overall depth of focus in said image.

4. The method of claims 1 or 2 or 3, wherein step c) further comprises:
II. performing additional softlens autofocus processing in image regions that are affected by tip;
III. performing additional softlens autofocus processing in image regions that are affected by tilt; and
IV. performing additional softlens autofocus processing in image regions that are affected by Petzval curvature.

5. The method of claim 4, wherein said step c) further comprises a step V:
V. constraining said softlens autofocus processing to achieve a preferred depth of field-look in an output image.

6. The method of claim 1 or 2, wherein said step c) further comprises a step II:
II. constraining said softlens autofocus processing to achieve a preferred depth of field-look in an output image.

7. The method of claim 3, wherein said step c) further comprises a step II:
II. constraining said softlens autofocus processing to achieve a preferred depth of field-look in an output image.

8. The method of claims 5 or 6 or 7, wherein said acceptable step size tolerance is close enough to the correct focus such that a concurrent softlens autofocus processing can complete a next focus action.

9. The method of claims 5 or 6 or 7, wherein said range-range limited softlens autofocus processing algorithm does not include an entire object distance range, but rather a focus range that is within the bounds of said mechanical autofocusing steps.

10. The method of claims 5 or 6 or 7, wherein said simplified softlens autofocus processing algorithm performs only over the bounds between two mechanical autofocus steps.

11. The method of claims 5 or 6 or 7, wherein said refocus-range-limited softlens autofocus processing algorithm need only refocus a camera system within a limited range of two neighboring mechanical autofocus steps.

12. The method of claims 5 or 6 or 7, wherein said softlens autofocus processing algorithm is constrained by user preference or by the type of camera system used.

13. The method of claims 5 or 6 or 7, wherein depth of field tuning after image capture is achieved by varying in software the strength of said softlens autofocus processing algorithm.

14. The method of claim 1 or 7, wherein a camera preset or presets are used in place of step f) or step g).
